Europäisches Patentamt

European Patent Office

Office européen des brevets

(19)

(11) Publication number: **0 369 729**
**A2**

## (12) EUROPEAN PATENT APPLICATION

(21) Application number: **89311755.6**

(22) Date of filing: **14.11.89**

(51) Int. Cl.5: **A23D 9/04, A23D 7/04**

(30) Priority: **16.11.88 GB 8826771**

(43) Date of publication of application:
**23.05.90 Bulletin 90/21**

(84) Designated Contracting States:
**AT BE CH DE ES FR GB GR IT LI NL SE**

(71) Applicant: **UNILEVER PLC**
**Unilever House Blackfriars P.O. Box 68**
**London EC4P 4BQ(GB)**

(84) **GB**

Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(72) Inventor: **Leach, Warren**
**Deecroft Dale End Road Barnston**
**Wirral Merseyside, L61 1DD(GB)**
Inventor: **Peaston, George Knox**
**11 Charlottes Meadow Spital Bebington**
**Wirral Merseyside, L63 3JH(GB)**
Inventor: **Wood, David John**
**Kibanda 6 Brookhurst, Close**
**Bromborough Merseyside, L63 0LF(GB)**

(74) Representative: **Dries, Antonius Johannes**
**Maria et al**
**Unilever N.V. Patent Division P.O. Box 137**
**NL-3130 AC Vlaardingen(NL)**

(54) **Process for maturing of fats.**

(57) For optimum bakery performance it is commonplace to hold margarines and shortenings at a temperature of around 27°C for 2-3 days. This process, known as "batch maturing", is complicated by the insulating properties of fat and requires considerable expenditure of energy and storage space.

It has been suggested (Oil and Fat vol 39.(12) 1986) that batch maturing may be avoided by in-line microwave irradiation during product processing. One disadvantage of using microwave irradiation is that heating of the fat is uneven and this may lead to local melting, which is undesirable, as it is necessary that the fat does not become molten during the maturing process. The specification discloses that claims, with comparative examples, a process for maturing of fat which comprises the step of illuminating a fatty body with radio-frequency radiation. This penetrates more deeply into the body and avoids uneven heating. By use of the claimed invention it is possible to dispense with batch maturing.

EP 0 369 729 A2

# PROCESS FOR MATURING OF FATS

The present invention relates to a process for the maturing of fats.

For optimum bakery performance it is commonplace to mature margarine and shortenings by holding at a temperature of around 27°C for 2 to 3 days immediately after manufacture. Maturing is distinct from bakers' tempering practice, in which the matured fats delivered to them are again held to achieve uniform temperature, but at about 20°C, to facilitate mixing with other ingredients. Maturing is an expensive process due to the storage space required and the energy needed to maintain the fat at this elevated temperature in moderate climates. The process is known as "batch maturing", and is believed to promote partial re-crystallisation of the fat and thereby modify its baking properties without losing its plastic nature. Careful process control is required to ensure that the fat is matured evenly and this can lead to difficulties where fat is matured in bulk, as in an assembly of individual blocks for example in pallet loads, as the well known insulating properties of fat resist attempts to heat pallet loads evenly.

It has been suggested (Oil and Fat vol 39.(12)(1986)) that batch maturing may be avoided by the use of in-line microwave irradiation during product processing. One disadvantage of using microwave irradiation is that heating of the fat is uneven and this may lead to local melting, which is undesirable, as it is necessary that the fat does not become molten during the maturing process but remains plastic. Indeed, it is well known that microwave radiation can be employed to melt fats. Local melting is however a particular problem when relatively large fatty bodies are heated with microwaves. Moreover, microwave apparatus is difficult to incorporate in an edible fat production line, as these lines are commonly of metallic construction and operate at elevated pressures, both of which are incompatible with the use of microwave generating apparatus.

A general description of microwave heating can be found in "The Scientific American" of February 1988. In that article, it is explained that in a microwave oven the centre of a large object is cooked by conduction rather than by central absorption of microwave energy.

Other attempts to mature fats in-line using conventional heat-exchanger apparatus have not met with success.

We have now determined how the problem of local heating can be overcome, and the batch maturing times for fatty products shortened considerably.

According to the present invention there is provided a process for maturing of fat which comprises the step of illuminating a fat-containing body, for example block of fat with radio-frequency radiation.

For the purpose of the present invention microwave radiation is defined as that electromagnetic radiation falling into a portion of the electromagnetic spectrum ranging from 1 GigaHertz to the far infrared. Conventional microwave ovens produce radiation at a frequency of around 2.5 GigaHertz. The radio-frequency region useful for maturing of fats lies at frequencies below 1 GigaHertz, and above 10MHz, preferably at around 25MHz.

Preferably the irradiation is continued for 40-200 seconds, either in a single continuously applied burst or in several bursts, either batchwise to an assembly of individual blocks or one at a time on a continuous basis and before or after packaging. It may be applied as an in-line step in a continuous process for the production of fat-containing bodies, for example shortening, margarine or other fat-containing emulsion food products, for example low fat spreads and creams, which may require a maturing step immediately after production.

In order that the present invention may be further understood the following comparative examples are given. These show the effect of radio-frequency irradiation on cake specific volume and cream specific volume as compared with conventional maturing.

In both cases the equipment employed was an "RF MELTER" supplied by Petrie and McNaught Ltd. of Rochdale, England.

## EXAMPLE 1: EFFECT OF RF TREATMENT ON SHORTENINGS

A conventional aerated shortening in 12.5kg boxes was subjected to RF illumination in three trials. The shortening was used to prepare a cake. The cake specific volume, cream specific volume, and Stephens values at 15 and 20°C were measured. A control sample of the shortening was subjected to conventional maturing in a maturing room at 27°C for 72 hours. The following results were obtained:

| Trial No. | 1A | 1B | 1C | Cont. |
|-----------|-----|-----|-----|-------|
| RF (secs) | 70 | 130 | 160 | --- |
| Cake SV | 2.33 | 2.38 | 2.37 | 2.35 |
| Cream SV | 2.69 | 2.60 | 2.89 | 2.60 |
| S15 | 499 | 450 | 483 | 418 |
| S20 | 337 | 276 | 239 | 240 |

Acceptable cake SV's lie in the range 2.2-2.6 whereas acceptable cream SV's lie in the range 2.5 to 2.8

In addition to the above, both the initial temperature and the final temperature at the top corners, bottom corners and centre of the blocks was measured promptly after the RF illuminating step. The results are given below.

| Trial No. | 1A | 1B | 1C | Cont. |
|-----------|------|------|------|-------|
| Top temp. | 24.0 | 25.4 | 26.1 | 22.9 |
| Bottom temp | 24.3 | 26.1 | 26.7 | 22.8 |
| Centre temp | 23.8 | 25.7 | 26.1 | 22.8 |

It is noted that the temperature has risen uniformly throughout the product.

EXAMPLE 2: EFFECT OF RF TREATMENT ON MARGARINES:

Example 1 was repeated with a conventional cake-baking margarine except that six trials were done. The following results were obtained:

| Trial No. | 2A | 2B | 2C | 2D | 2E | 2F | Cont |
|-----------|------|------|------|------|------|------|------|
| RF (secs) | 70 | 130 | 160 | 190 | 230 | 260 | --- |
| Cake SV | 2.42 | 2.49 | 2.51 | 2.40 | 2.36 | 2.38 | 2.47 |
| Cream SV | 1.90 | 1.90 | 1.90 | 1.95 | 2.00 | 1.95 | 1.95 |
| S15 | 660 | 640 | 650 | 596 | 605 | 565 | 483 |
| S20 | 387 | 383 | 290 | 205 | 307 | 288 | 222 |

Heating was again determined to be substantially uniform throughout the block. Acceptable values for the cake SV lie in the range 2.4 to 2.7 and acceptable values for the cream SV lie in the range 2.8 to 2.1.

In a comparative example without either RF treatment or batch maturing in a maturing room, a cake SV of less than 2.15 was obtained. This is considered unacceptable.

It is noted that in both cases the products of the RF treatment are not only softer than the non-matured sample but also firmer than the conventionally matured samples. The bakery performance of samples 1A-1C and 2A-2D were judged to be equivalent to samples matured by the standard procedure, all the RF-matured samples were judged to be satisfactory.

**Claims**

1. Process for maturing of fat which comprises a step of illuminating a fat-containing body with radio frequency radiation.

2. Process as claimed in claim 1 wherein the radiation wavelength lies in the range 1GHz to 10 MHz.

3. Process as claimed in claim 1 or 2 wherein the fat containing body is illuminated for 40-200 seconds.

4. Process according to any of the preceding claims in which the body comprises freshly prepared shortening fat or margarine.

5. Process according to any of the preceding claims in which an assembly of individual blocks is illuminated.

6. Process according to any of the preceding claims in which the body comprises a continuous block illuminated during passage through a radiation zone.

7. An edible fat product prepared according to the method of claim 1.